# EUROPÄISCHE PATENTSCHRIFT

(11) **EP 2 139 342 B1**
(45) Veröffentlichungstag und Bekanntmachung des Hinweises auf die Patenterteilung: **24.11.2010**
(21) Anmeldenummer: 08715692.3
(22) Anmeldetag: 06.02.2008
(51) Int. Cl.: A22B 5/20

(54) **VORRICHTUNG ZUM AUFSCHNEIDEN EINES GESCHLACHTETEN TIERES**
DEVICE FOR CUTTING OPEN A SLAUGHTERED ANIMAL
DISPOSITIF POUR DÉCOUPER UN ANIMAL ABATTU

(30) Priorität: 03.05.2007 DE 102007021417
(43) Veröffentlichungstag der Anmeldung: 06.01.2010
(73) Patentinhaber: SCHMID & WEZEL GmbH & Co., 75433 Maulbronn (DE)
(72) Erfinder: MAMMEL, Erich, 75417 Mühlacker-Lienzingen (DE)
(74) Vertreter: Meier, Christof
(86) Internationale Anmeldenummer: PCT/EP2008/000892
(87) Internationale Veröffentlichungsnummer: WO 2008/135104

(56) Entgegenhaltungen:
- EP-A- 0 457 410
- WO-A-00/70957
- DE-A1- 3 319 261

## Beschreibung

Die Erfindung betrifft eine Vorrichtung zum Aufschneiden eines geschlachteten Tieres, zum Beispiel eines Schweins, mit einer entlang der Bauchseite des Schlachttieres geführten Schneideinrichtung, die einen Positionierungskörper aufweist, der die Vorderbeine des Tieres auseinander drückt.

Eine derartige Vorrichtung ist aus DE-A-3319261 bekannt. Dabei kann der Positionierungskörper einteilig (vgl. EP 1 182 933 A1) oder zweiteilig (vgl. EP 0 247 763, US 5 160 295 A) ausgebildet sein (vgl. ferner EP 0 475 410 A1, NL 9001154 A1, US 5 626 515 A).

Der Erfindung liegt die Aufgabe zugrunde, eine Vorrichtung der eingangs genannten Art derart weiterzubilden, dass der Positionierungskörper besser an die unterschiedlichen Anatomien der Schlachttiere angepasst werden kann.

Die Lösung der Aufgabe erfolgt mittels einer Vorrichtung gemäß Anspruch 1.

Ein Ausführungsbeispiel der Erfindung und ihrer vorteilhaften Weiterbildungen wird im Folgenden näher beschrieben. Es stellen dar:
- Figur 1: eine schematische Darstellung der Wirkungsweise der Ausführungsbeispiele;

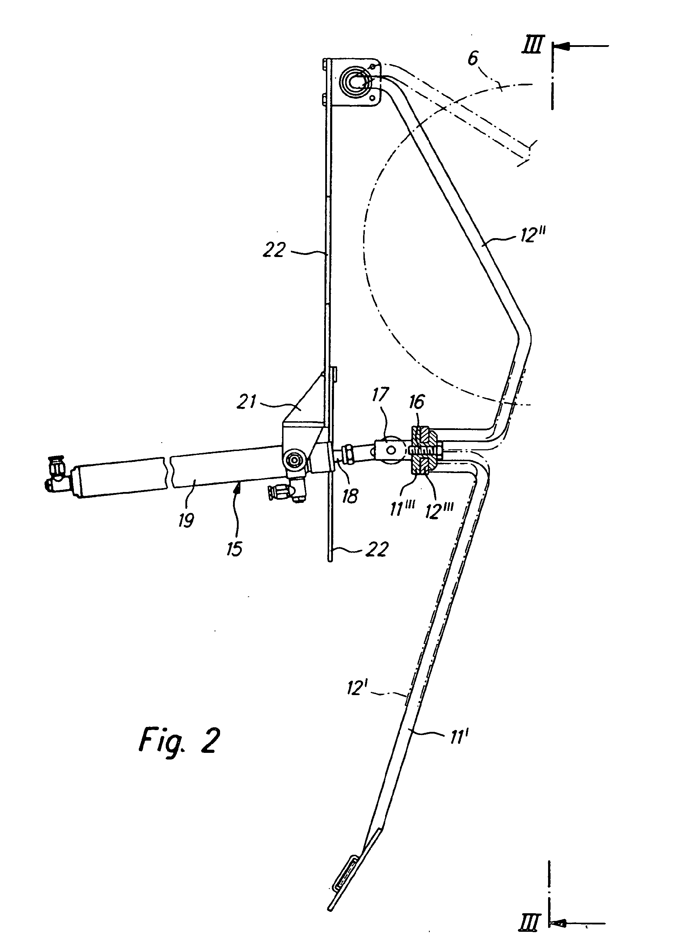

- Figur 2: eine Seitenansicht der Positionierungsmittel nach Figur 1;
- Figur 3: eine Ansicht der Vorrichtung nach Figur 2 in Richtung der Pfeile III-III in Figur 2;
- Figur 3a: einen Schnitt entlang der Linie IIIa-IIIa in Figur 3;
- Figur 4: ein zweites Ausführungsbeispiel;
- Figur 5: ein drittes Ausführungsbeispiel;
- Figur 6: ein viertes Ausführungsbeispiel.

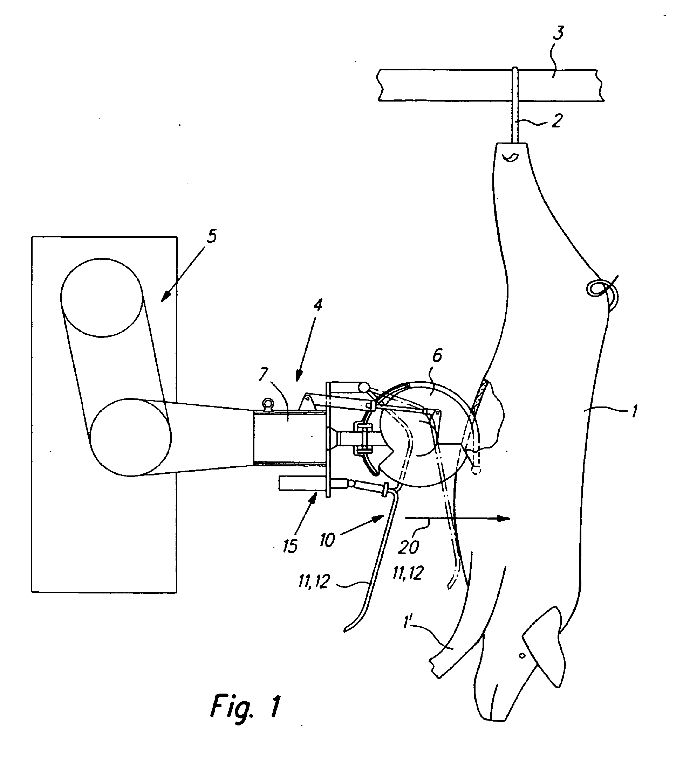

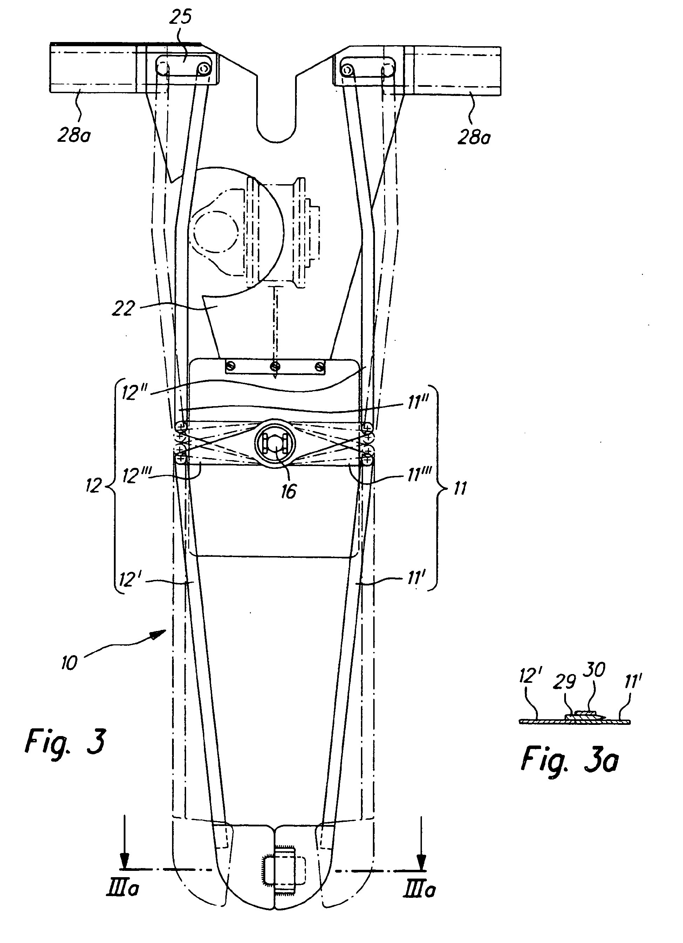

Figur 1 zeigt, wie ein geschlachtetes Schwein 1, das an den Hinterbeinen mit einem Haken 2 an einem Förderband 3 aufgehängt ist, durch eine Vorrichtung 4, die von oben nach unten im Wesentlichen vertikal dem Bauch des Tieres entlang von einem Roboter 5 geführt wird und ein Schneidmesser 6 aufweist, aufgeschnitten wird. Das Schneidmesser 6 ist eine Säge, angetrieben von einem Motor 7, der an den Roboter 5 angeflanscht ist. Teil der Vorrichtung 4 ist ein Positionierungskörper 10, gebildet durch zwei Arme 11, 12 (siehe Figur 3), der von einer Stelleinrichtung 15 aus der in durchgezogenen Linien dargestellten Stellung in die in gestrichelten Linien dargestellte Stellung, also in Richtung 20 (parallel zum Schneidmesser 6), geschwenkt werden kann. Die Arme 11 und 12 des Positionierungskörpers 10 wirken als Spreizschere zusammen. In der gestrichelt eingezeichneten Stellung liegen die Arme 11, 12 am Bauch des Tieres an. Der Arm 11 weist einen sich zum unteren offenen Ende hin erstreckenden Bereich 11', einen oberen sich zu den Verstellmitteln 25, 26, 27, 28, 28a hin erstreckenden Bereich 11" und einen diese beiden miteinander verbindenden Bereich 11"' auf. Entsprechend umfasst der Arm 12 die Bereiche 12', 12", 12"'. Beide Arme bilden zusammen eine scherenartige Spreizvorrichtung. An der Stelle ihrer Überkreuzung sind die mittleren Bereiche 11"' und 12"' über einen Zapfens 16 drehbar miteinander verbunden sind. Der Zapfen 16 ist über ein Drehgelenk 17 an einem Kolben 18 angeordnet, der in einem Zylinder 19 verschiebbar ist und mit diesem eine Kolben/Zylinder-Anordnung bildet, durch die der durch die beiden Arme 11, 12 gebildete Positionierungskörper 10 verschwenkt werden kann. Der Zylinder 19 ist drehbar auf einem Haltebügel 21 angeordnet. Dieser ist auf einer Platte 22 fest angeordnet.

Die oberen Bereiche 11", 12" der Arme 11, 12 sind jeweils mit einem Führungsklotz 25 beziehungsweise 26 drehbar verbunden. Diese sind in Schienen 27 beziehungsweise 28 gegeneinander und aufeinander zu verschiebbar sind. Die Verstellung kann durch verschiedene Verstellmittel erfolgen (siehe dazu Figur 3, 4, 5, 6). Dadurch werden die unteren Bereiche 11' beziehungsweise 12' entweder geschlossen und können so in den Zwischenraum zwischen den Vorderbeinen 1' des Tieres 1 eingeführt und dann so gespreizt werden, dass dann wahrend des Schnitts die Vorderbeine 1' auseinander gedruckt werden und der Schnitt, wie durch die Weiterverarbeitung geboten, optimal geführt werden kann. In den Figuren 3 - 6 ist die Geschlossen-Stellung in durchgezogenen Linien, die Offen-Stellung in strichpunktierten Linien dargestellt. In der geschlossenen Stellung greift, wie aus Figur 3a ersichtlich, ein an dem Bereich 12' des Armes 12 angebrachter Führungsplatte 29 in eine von einem Bügel 30, der am Bereich 11' angeordnet ist, gebildete Öffnung ein.

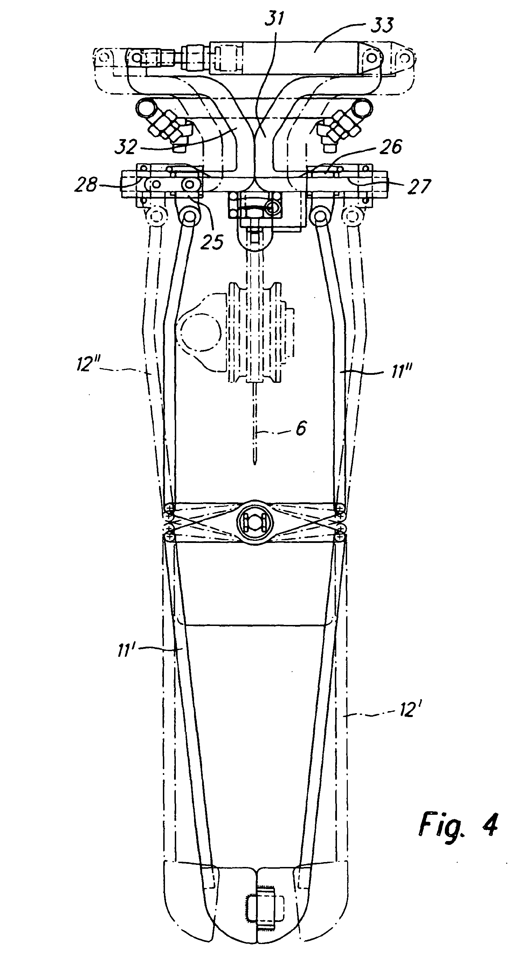

Bei dem Ausführungsbeispiel nach Figur 4 sind die beiden Führungsklötze 25, 26 über U-förmige Bügel 31, 32 mittels einer Kolben/Zylinder-Anordnung 33 gegeneinander verschiebbar.

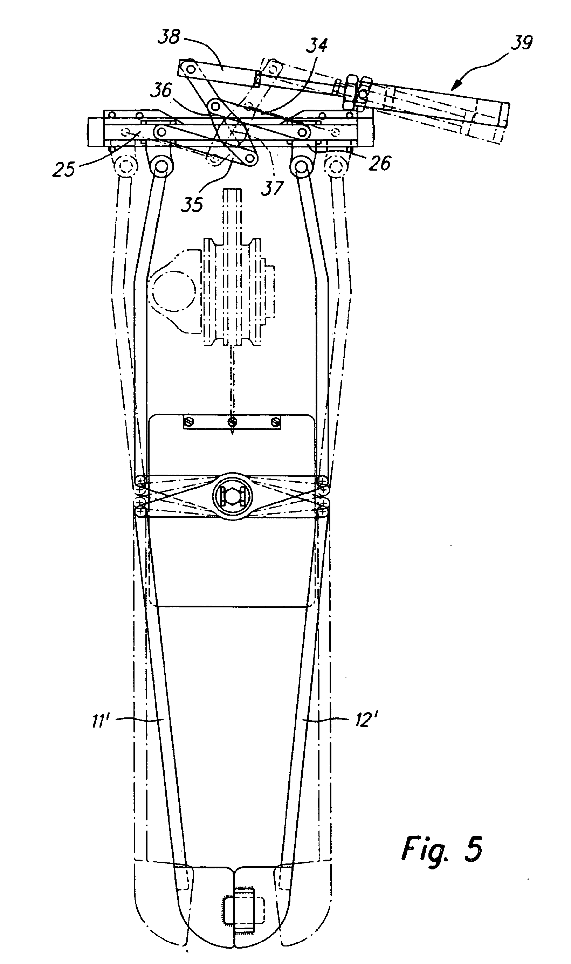

Beim Ausführungsbeispiel nach Figur 5 sind die beiden Führungsklötze 25, 26 durch zwei parallele Lenker 34, 35 gegeneinander verschiebbar. Diese sind über ein Verbindungsstück 36 miteinander verbunden, das an einem Drehpunkt 37 an der Vorrichtung angelenkt ist. An dem Verbindungsstück 36 greift der Kolben 38 an, der in dem Zylinder 39 verschiebbar ist, um eine Spreizung oder ein Schließen der Arme 11 und 12 herbeizuführen.

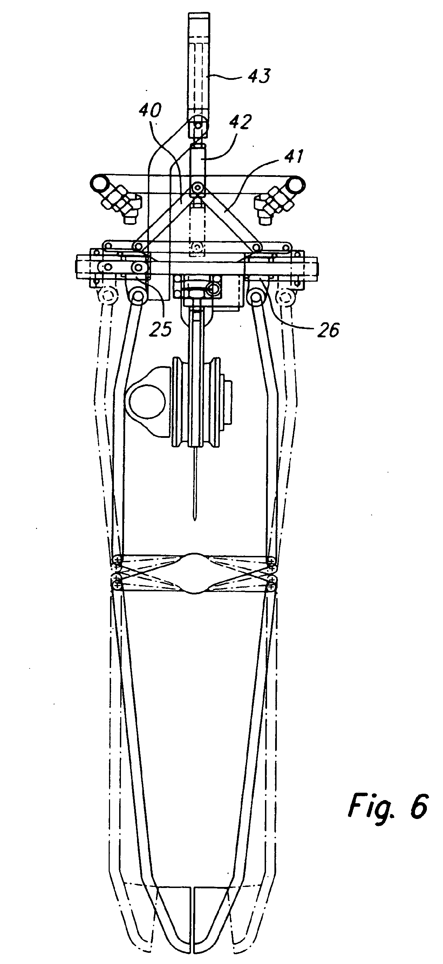

Nach Figur 6 werden die beiden Führungsklötze 25, 26 gegeneinander mittels eines durch zwei Hebel 40, 41 gebildeten Kniehebelgelenks und einer durch Kolben 42 und Zylinder 43 gebildeten Kolben/Zylinderanordnung gegeneinander verschoben.

Die Entscheidung darüber, welche der verschiedenen Arten der Verstellung der beiden Arme 11, 12 zueinander gewählt wird, hängt im Einzelfall von den Einbaubedingungen ab. Die Stellmittel können pneumatisch, elektrisch oder hydraulisch betätigbar sein.

## Patentansprüche

1. Vorrichtung zum Aufschneiden eines geschlachteten Tieres (1), zum Beispiel eines Schweins, mit einer entlang des Bauches des Tieres (1) geführten Schneideinrichtung (10), die einen Positionierungskörper (11, 12) aufweist, der die Vorderbeine (1') des Tieres (1) auseinander drückt, **wobei** der Positionierungskörper durch zwei als Spreizeinrichtung zusammenwirkende Arme (11, 12) gebildet wird, die durch Verstellmittel (25, 26, 27, 28, 28a, 33, 38, 39, 42, 43) aufeinander zu und voneinander weg bewegbar sind, **dadurch gekennzeichnet, dass** die Arme (11, 12) je einen ersten Bereich (11', 12') zum Aufspreizen der Vorderbeine (1') des Tieres (1), einen zweiten Bereich (11", 12") zur Verbindung an gegeneinander verschiebbaren Verstellmitteln, sowie einen den ersten und den zweiten Bereich verbindenden dritten Bereich (11"', 12"') aufweisen, wobei die dritten Bereiche (11"', 12"') miteinander drehbar verbunden sind.

2. Vorrichtung nach Anspruch 1, **dadurch gekennzeichnet, dass** der Positionierungskörper durch weitere Verstellmittel (15) zum Anliegen an den Bauch des Tieres (1) verschwenkbar ist.

3. Vorrichtung nach Anspruch 1, **dadurch gekennzeichnet, dass** die zweiten Bereiche (11", 12") der Arme (11, 12) an ihren Enden drehbar mit Führungsklötzen (25, 26) verbunden sind und die Führungsklötze (25, 26) in Führungsschienen (27, 28) verschiebbar sind.

4. Vorrichtung nach einem der Ansprüche 1 - 3, **dadurch gekennzeichnet, dass** die Verstellmittel eine Kolben-Zylinder-Anordnung (28a, 33; 38, 39; 42, 43) aufweisen.

5. Vorrichtung nach Anspruch 4, **dadurch gekennzeichnet, dass** die Kolben-Zylinder-Anordnung (33) parallel zu den Führungsschienen (27, 28) angeordnet ist.

6. Vorrichtung nach Anspruch 4, **dadurch gekennzeichnet, dass** die Kolben-Zylinder-Anordnung (38, 39) einen an einem ortsfesten Drehpunkt (37) drehbar angeordneten Verbindungsstück (36) angreift, an dem, jeweils beidseitig des Drehpunktes (37) Lenker (34, 35) angreifen, die je mit einem der Führungsklötze verbunden sind.

7. Vorrichtung nach Anspruch 4, **dadurch gekennzeichnet, dass** die Kolben-Zylinder-Anordnung (42, 43) senkrecht zu den Führungsschienen (27, 28) angeordnet ist und die Führungsklötze (25, 26) über eine Kniehebelanordnung (40, 41) die Führungsklötze (25, 26) verschiebt.

## Claims

1. A device for cutting open a slaughtered animal (1), such as a pig, having a cutting device (10) guided along the belly of the animal (1), which cutting device has a positioning body (11, 12) which forces the front legs (1') of the animal (1) apart, wherein the positioning body is formed by two arms (11, 12), cooperating a spreader, which are movable toward and away from one another by adjusting means (25, 25, 27, 28, 28a, 33, 38, 39, 42, 43), **characterized in that** the arms (11, 12) each have one first region (11', 12') for spreading apart the front legs (1') of the animal (1), a second region (11", 12") for connection to mutually displaceable adjusting means, and a third region (11"', 12"'), connecting the first and second regions, the third regions (11"', 12"') being rotatably connected to one another.

2. The device as defined by claim 1, **characterized in that** the positioning body is pivotable, for being placed against the belly of the animal (1), by further adjusting means (15).

3. The device as defined by claim 1, **characterized in that** the second regions (11", 12") of the arms (11, 12) are connected rotatably on their ends to guide blocks (25, 26), and the guide blocks (25, 26) are displaceable in guide rails (27, 28).

4. The device as defined by one of claims 1 through 3, **characterized in that** the adjusting means have a piston-cylinder assembly (28a, 33; 38, 39; 42, 43).

5. The device as defined by claim 4, **characterized in that** the piston-cylinder assembly (33) is disposed parallel to the guide rails (27, 28).

6. The device as defined by claim 4, **characterized in that** the piston-cylinder assembly (38, 39) engages a connecting piece (36), disposed rotatably at a fixed pivot point (37), on which connecting piece connecting rods (34, 35) engage both sides of the pivot point (37), the connecting rods being connected to one of the guide blocks.

7. The device as defined by claim 4, **characterized in that** the piston-cylinder assembly (42, 43) is disposed perpendicular to the guide rails (27, 28) and displaces the guide blocks (25, 26) via a toggle lever assembly (40, 41).

## Revendications

1. Dispositif pour découper en tranches un animal abattu (1), par exemple un porc, comprenant un dispositif de coupe (10) guidé le long du ventre de l'animal (1), présentant un corps de positionnement (11, 12) qui écarte les pattes avant (1') de l'animal (1), le corps de positionnement étant formé par deux bras (11, 12) agissant conjointement comme dispositif d'écartement, lesquels peuvent être rapprochés et écartés l'un de l'autre par des moyens de réglage (25, 26, 27, 28, 28a, 33, 38, 39, 42, 43), **caractérisé en ce que** les bras (11, 12) présentent chacun une première zone (11', 12') pour l'écartement des pattes avant (1') de l'animal (1), une seconde zone (11", 12") pour la liaison sur des moyens de réglage déplaçables l'un par rapport à l'autre et une troisième zone (11"', 12"') reliant la deuxième et la troisième zones, les troisièmes zones (11"', 12"') étant reliées les unes aux autres de façon rotative.

2. Dispositif selon la revendication 1, **caractérisé en ce que** le corps de positionnement peut être basculé par d'autres moyens de réglage (15) pour venir se placer sur le ventre de l'animal (1).

3. Dispositif selon la revendication 1, **caractérisé en ce que** les deux zones (11", 12") des bras (11, 12) sont reliés par leurs extrémités de façon rotative à des blocs de guidage (25, 26) et les blocs de guidage (25, 26) peuvent coulisser dans des rails de guidage (27, 28).

4. Dispositif selon l'une quelconque des revendications 1 à 3, **caractérisé en ce que** les moyens de réglage présentent un agencement piston-cylindre (28a, 33 ; 38, 39 ; 42, 43).

5. Dispositif selon la revendication 4, **caractérisé en ce que** l'agencement piston-cylindre (33) est disposé parallèlement aux rails de guidage (27, 28).

6. Dispositif selon la revendication 4, **caractérisé en ce que** l'agencement piston-cylindre (38, 39) saisit une pièce de liaison (36) disposée de façon rotative sur un point de rotation (37) fixe, pièce sur laquelle s'appliquent, à chaque fois des deux côtés du point de rotation (37), des bielles (34, 35) qui sont reliées chacune à l'un des blocs de guidage.

7. Dispositif selon la revendication 4, **caractérisé en ce que** l'agencement piston-cylindre (42, 43) est disposé perpendiculairement aux rails de guidage (27, 28) et fait coulisser les blocs de guidage (25, 26) au moyen d'un système de levier à genouillère (40, 41).
